# EUROPEAN PATENT APPLICATION

(11) **EP 2 869 502 A1**
(43) Date of publication of application: **06.05.2015**
(21) Application number: 13191434.3
(22) Date of filing: 04.11.2013
(51) Int. Cl.: H04L 12/66

(54) **Method of packaging and unpackaging packet and apparatuses using the same**

(30) Priority: 01.11.2013 KR 20130132221
(71) Applicant: THN Corp., Daegu 704-900 (KR)
(72) Inventor: Kim, Eung-soo, 406-840 Incheon (KR); Baek, Nam-seok, 442-130 Suwon-si (KR); Lee, Sun-yong, 480-935 Uijeongbu-si (KR); Kim, Kyung-su, 702-755 Daegu (KR)
(74) Representative: Peter, Julian

(57) **Abstract**

A method of packaging a packet is provided. The method includes receiving by a gateway a packet of an other protocol transmitted from an electronic control unit, and packaging by the gateway the entire received packet of the other protocol in a data field of an Ethernet packet.

## Description

### BACKGROUND OF THE INVENTION

### 1. Field of the Invention

The present invention relates to a method of packaging and unpackaging a packet, and more particularly to a method of packaging an entire packet of an other protocol in a data field of an Ethernet packet, or unpackaging an entire packet of an other protocol packaged in a data field of an Ethernet packet, and apparatuses using the same.

### 2. Description of the Related Art

Various subsystems including a power train for transmitting power as well as a subsystem related to convenience, safety and multimedia in a vehicle have been controlled by means of a plurality of electronic control units.

In order to control the plurality of electronic control units, various control network technologies including a Controller Area Network (CAN) communication, a Local Interconnect Network (LIN) communication, a K-LINE communication and a FlexRay communication have been used.

The CAN communication which is a standard interface of a short-range communication network for a vehicle has been most widely popularized. The CAN communication has a maximum transmission rate of 1 Mbps, and uses a single channel. The CAN communication has been generally used for a control of a power train system such as an engine and an automatic transmission, and a control of a body system such as a door and an air conditioner of a vehicle. The CAN communication has been used in various industry fields including factory automation, shipping, medical instruments, industrial instruments as well as vehicles.

The LIN communication is a cheap serial bus communication protocol, and has been generally applied to a subsystem for providing a convenience function in a vehicle. The LIN communication has a maximum transmission rate of 20kbps.

The FlexRay communication is used when higher communication reliability than the CAN communication or the LIN communication is required, or a faster message transmission rate is required. Accordingly, the FlexRay communication may be applied to an improved power train system as well as a subsystem implemented through the CAN communication or the LIN communication. The FlexRay communication can provide high-speed communication environment of a maximum communication rate of 20Mbps using two communication channels of 10Mbps.

However, the increase in the number of electronic control units applied to a vehicle and the amount of control signals has caused a rapid increase in the communication complexity within a vehicle. Accordingly, there is a requirement for an intra-vehicle communication system which can satisfy the increasing communication complexity (i.e. communication bandwidth).

### SUMMARY OF THE INVENTION

The present invention has been made to solve the above-mentioned problem in the conventional art, and an aspect of the present invention is to provide a method of packaging an entire packet of an other protocol in a data field of an Ethernet packet, or unpackaging an entire packet of another protocol packaged in a data field of an Ethernet packet, and apparatuses using the same.

In accordance with an aspect of the present invention, a method of packaging a packet is provided. The method includes: receiving by a gateway a packet of an other protocol transmitted from an electronic control unit; and packaging by the gateway the entire received packet of the other protocol in a data field of an Ethernet packet.

According to the embodiment, the method further includes generating by the gateway residual fields of the Ethernet packet except for the data field after packaging the received packet by means of the gateway.

According to the embodiment, the packet of the other protocol may be a Control Area Network (CAN) packet, a Local Interconnect Network (LIN) packet, a K-LINE packet, a FlexRay packet or a Media Oriented Systems Transport(MOST) packet.

In accordance with another aspect of the present invention, a method of unpackaging a packet is provided. The method includes: receiving by a first gateway an Ethernet packet transmitted from a second gateway; and unpackaging by the first gateway an entire packet of an other protocol which is packaged in a data field of the received Ethernet packet.

According to the embodiment, the method further includes transmitting by the gateway the unpackaged packet of the other protocol to an electronic control unit after the unpackaging of the packet by means of the gateway.

According to the embodiment, the packet of the other protocol may be a Control Area Network (CAN) packet, a Local Interconnect Network (LIN) packet, a K-LINE packet, a FlexRay packet or Media Oriented Systems Transport(MOST) packet.

In accordance with still another embodiment of the present invention, a communication system in a vehicle is provided. The communication system includes: a first gateway for receiving a packet of an other protocol transmitted from an electronic control unit, and packaging the received entire packet of the other protocol in a data field of an Ethernet packet; and a second gateway for receiving the Ethernet packet through an Ethernet communication network from the first gateway, and unpackaging the entire packet of the other protocol which is packaged in the data field of the received Ethernet packet.

According to the embodiment, the first gateway and the second gateway form a bus structure.

According to the embodiment, the first gateway extracts a part of the packet of the other protocol when the entire packet of the other protocol is packaged in the data field of the Ethernet packet, and rearranges transmission priority of the Ethernet packet based on the part of the packet of the other protocol.

According to the embodiment, the packet of the other protocol may be a Control Area Network (CAN) packet, a Local Interconnect Network (LIN) packet, a K-LINE packet, a FlexRay packet or Media Oriented Systems Transport(MOST) packet.

The method and apparatus according to the embodiment of the present invention can package an entire packet of an other protocol in a data field of an Ethernet packet, or unpackage an entire packet of an other protocol packaged in a data field of an Ethernet packet, thereby transmitting the packet of the other protocol through an Ethernet communication network without a complicated conversion.

Further, by using the method and apparatus according to the embodiment of the present invention, it is possible to effectively implement a central network based on an Ethernet with a wide bandwidth.

### BRIEF DESCRIPTION OF THE DRAWINGS

The description of each figure is provided in order to help a sufficient understanding of the drawings which are referred in the detailed description of the present invention;
Fig. 1 is a block diagram illustrating a communication system in a vehicle according to an embodiment of the present invention;
Fig. 2 is a view illustrating a process of packaging a Controller Area Network (CAN) packet in an Ethernet packet;
Fig. 3 is a view illustrating a process of unpackaging a CAN packet packaged in an Ethernet packet;
Fig. 4 is a view illustrating a process of packaging a Local Interconnect Network (LIN) packet in an Ethernet packet;
Fig. 5 is a view illustrating a process of unpackaging a LIN packet packaged in an Ethernet packet;
Fig. 6 is a view illustrating a process of packaging a K-LINE packet in an Ethernet packet;
Fig. 7 is a view illustrating a process of unpackaging a K-LINE packet packaged in an Ethernet packet;
Fig. 8 is a view illustrating a process of packaging a FlexRay packet in an Ethernet packet;
Fig. 9 is a view illustrating a process of unpackaging a FlexRay packet packaged in an Ethernet packet;
Fig. 10 is a block diagram illustrating an example of a gateway shown in Fig. 1;
Fig. 11 is a block diagram illustrating another example of a gateway shown in Fig. 1;
Fig. 12 is a flowchart illustrating a process of packaging a packet of an other protocol in an Ethernet protocol packet according to the embodiment of the present invention;
Fig. 13 is a flowchart illustrating a process of unpackaging a packet of an other protocol in an Ethernet protocol packet according to the embodiment of the present invention; and
Fig. 14 is a flowchart illustrating a process of rearranging transmission priority of an Ethernet protocol packet in which the packet of the other protocol is packaged according to the embodiment of the present invention.

### DETAILED DESCRIPTION OF THE EXEMPLARY EMBODIMENTS

The description of a specific configuration or function with respect to the embodiments according to a concept of the present invention disclosed in the present specification merely is an example for a purpose of describing the embodiment according to the concept of the present invention. Therefore, the embodiments according to the concept of the present invention may be implemented in various forms, but the present invention is not limited to the embodiments described in the description.

The embodiments according to the concept of the present invention may be changed and modified in various forms. Thus, the embodiments will be illustrated in the drawings and described in the present specification. The embodiments according to the concept of the present invention are not limited to a specific disclosure, and include all modifications, equivalents and substitutions without departing from the spirit and the scope of the present invention.

Although the terms "ordinal numbers" such as first, second and the like are used to describe various structural elements, the structural elements should not be defined by the terms. The terms are used to distinguish a structural element from another structural element, and thus a first structural element may be named a second structural element while the second structural element may be similarly named first structural element, without departing from the scope according to the concept of the present invention.

When it is described that a certain structural element "is connected to" or "is in contact with" another structural element, it should be understood that although the certain structural element is directly connected to or is in direct contact with another structural element, still another structural element may be interposed therebetween. On the other hand, when it is described that a certain structural element "is directly connected to" or "is in direct contact with" another structural element, it should be understood that still another structural element is not present between the structural elements. The other expressions of describing a relation between structural elements, i.e. "between" and "merely between" or "neighboring" and "directly neighboring", should be interpreted similarly to the above description.

In the present specification, the terms are merely used to describe a specific embodiment, and are not intended to limit the present invention. A singular expression includes a plural expression unless they are differently defined in a context. In the specification, it should be understood that the terms "include" and "have" indicate existence of a feature, a number, a step, an operation, a structural element, parts, or a combination thereof, and do not previously exclude the existence or probability of addition of one or more other features, numbers, steps, operations, structural elements, parts, or combinations thereof.

Unless defined differently, all terms used herein, which include technical terminologies or scientific terminologies, have the same meaning as that generally understood by a person skilled in the art to which the present invention belongs. It should be interpreted that the terms, which are identical to those defined in general dictionaries, have the meaning identical to that in the context of the related technique. The terms should not be ideally or excessively interpreted as a formal meaning unless not clearly defined.

In the specification, a module may refer to hardware capable of executing a method according to the embodiment of the present invention, or a functional or structural combination of software capable of operating the hardware.

Accordingly, the module may mean program codes and a logical unit or set of a hardware resource capable of executing the program codes, but does not essentially mean a physically connected codes or a kind of hardware.

In the specification, a packet may widely mean a bundle of data transmitted as a unit by a transmission side and a reception side with relation to a data transmission, and a concept that is includes a frame.

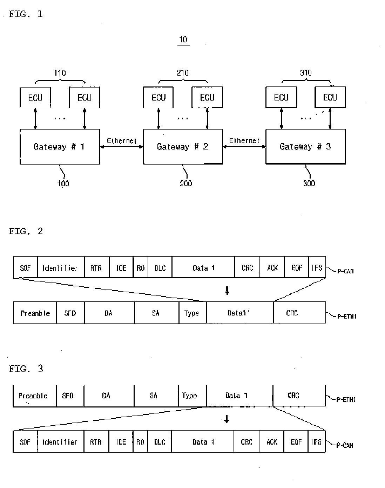

Fig. 1 is a block diagram illustrating a communication system in a vehicle according to an embodiment of the present invention.

Referring to FIG. 1, the communication system 10 in the vehicle includes a plurality of gateways 100, 200 and 300, and electronic control units 110, 210 and 310 connected to the plural gateways 100, 200 and 300 respectively.

The communication system 10 in the vehicle may have a central network based on the Ethernet. That is, the gateways 100, 200 and 300 constituting the central network of the communication system 10 in the vehicle can communicate with one another using Ethernet communication.

Considering that the Ethernet communication may have a bandwidth of 100Mbps∼10000Mbps, the central network of the communication system 10 in the vehicle is enabled to use the Ethernet communication, thereby implementing a high-speed communication system.

In Fig. 1, although it is illustrated that the gateways 100, 200 and 300 of the communication system 10 in the vehicle constitute a bus-type network, the present invention is not limited thereto.

According to the embodiment of the present invention, the gateways 100, 200 and 300 of the communication system 10 in the vehicle may constitute various types of networks including a ring type, a star type and a tree type.

The gateways 100, 200 and 300 can individually relay the communication among the electronic control units 110, 210 and 310, based on the Ethernet communication.

That is, the gateways 100, 200 and 300 can receive a packet of an other protocol such as a Controller Area Network (CAN) packet, a Local Interconnect Network (LIN) packet, a K-LINE packet, or FlexRay packet as well as an Ethernet protocol packet, transmitted from the electronic control units 110, 210 and 310, respectively. The gateways 100, 200 and 300 can individually package the received packet of the other protocol in an Ethernet packet. The gateways 100, 200 and 300 transmit and receive the Ethernet packet in which the packet of the other protocol is packaged, to/from one another by using Ethernet communication.

Further, the gateways 100, 200 and 300 can individually unpackage the packet of the other protocol packaged in the received Ethernet packet. The packet of the other protocol which is unpackaged may be transmitted to each of the electronic control units 110, 210 and 310 which communicate with the gateways 100, 200 and 300 respectively.

The gateways 100, 200 and 300 may communicate with one another in a server-client manner. That is, the gateway 100 may transmit the Ethernet packet, in which the packet of the other protocol is packaged, to other gateways 200 and 300, and may receive the Ethernet packet, in which the packet of the other protocol is packaged, from the gateways 200 and 300.

The configuration, the packaging operation and the unpackaging operation of each of the gateways 100, 200 and 300 will be described with respect to Figs. 2 to 13.

The electronic control units 110, 210 and 310 may individually mean a unit to control various subsystems including a subsystem for convenience, security and multimedia in the vehicle and a power train for a transmission of power.

The electronic control units 110, 210 and 310 may transmit and receive a packet to/from the gateways 100, 200 and 300 respectively through the other protocol such as CAN communication, LIN communication, K-LINE communication, or FlexRay communication, as well as the Ethernet.

Fig. 2 is a view illustrating a process of packaging a CAN packet in an Ethernet packet.

Referring to Figs. 1 and 2, the CAN packet (P-CAN) includes a Start of Frame (SOF), an Identifier, a Remote Transmission Request (RTR), an Identifier Extension (IDE), a Reserved bit (R0), a Data Length Code (DLC), a data field (Data1), a Cyclic Redundancy Check (CRC), an Acknowledge (ACK), an End of Frame (EOF), and an Inter Frame Space (IFS).

The CAN packet (P-CAN) of Fig. 2 is an embodiment of the CAN packet, and shows a format of a CAN 2.0A version according to the standard provision (ISO11898) of ISO. However, it should not be interpreted that the technical scope of the present invention is defined by a configuration of the CAN packet (P-CAN).

The SOF indicates a start of a message, and the Identifier may include information on priority of a message.

The RTR is a bit of a remote transmission request. When the RTR is '0', it indicates that the CAN packet (P-CAN) is a packet for a transmission of data. When the RTR is '1', it indicates that the CAN packet (P-CAN) is for a remote transmission request.

The IDE distinguishes a standard identifier and an extended identifier, and the DLC indicates the byte number of data (Data1). The CRC is a checksum of 16 bits to detect error, and the ACK is a bit to indicate that the CAN packet (P-CAN) is exactly received.

The EOF indicates an end of the CAN packet (P-CAN), and the IFS is a field which includes the amount of time required by the controller.

An Ethernet packet (P-ETH1) includes a Preamble, a Start Frame Delimiter (SFD), a Destination Address (DA), a Source Address (SA), a Type, a data field (Data1'), and a Cyclic Redundancy Check (CRC).

The Preamble is a field for synchronization of a bit, and the SFD functions to indicate a start of frame. The DA indicates a Media Access Control (MAC) address of a destination which is able to receive the Ethernet packet (P-ETH1), and the SA indicates a MAC address of a transmitter which transmits the Ethernet packet (P-ETH1).

The Type indicates the type of the Ethernet packet (P-ETH1), and the data field (Data1) includes data to be transmitted. The CRC is used to detect an error of the Ethernet packet (P-ETH1).

The gateways 100, 200 and 300 can individually package the entire packet of the other protocol, i.e. the entire CAN packet (P-CAN) as well as the Ethernet in the data field (Data1') of the Ethernet packet (P-ETH1). That is, all fields of the packaged CAN packet (P-CAN), i.e. the SOF, the Identifier, the RTR, the IDE, the Reserved bit (R0), the DLC, the data field (Data1), the CRC, the ACK, the EOF and the IFS, are included in the data field (Data1') of the Ethernet packet (P-ETH1).

According to the embodiment of the present invention, after packaging, the gateways 100, 200 and 300 individually generate residual fields, i.e. the Preamble, the SFD, the DA, the SA, the Type and the CRC of the Ethernet packet (P-ETH1), except for the data field (Data1'). According to circumstances, an unnecessary part may be maintained in a default state.

Therefore, the gateways 100, 200 and 300 individually package the CAN packet (P-CAN) in the Ethernet packet (P-ETH1), thereby transmitting the CAN packet (P-CAN) through the Ethernet communication network without a conversion process.

Referring to Fig. 1, the Ethernet packet (P-ETH1) in which the entire CAN packet (P-CAN) is packaged may be transmitted and received among the gateways 100, 200 and 300.

Fig. 3 is a view illustrating a process of unpackaging the CAN packet packaged in the Ethernet packet.

Referring to Figs. 1 to 3, the gateways 100, 200 and 300 individually unpackage the CAN packet (P-CAN) included in the data field (Data1') of the Ethernet packet (P-ETH1) which is received through the Ethernet communication network, and transmit the unpackaged CAN packet to the electronic control units 110, 210 and 310, respectively.

The unpackaging process of Fig. 3 is achieved through a reverse process of the packaging process shown in Fig. 2.

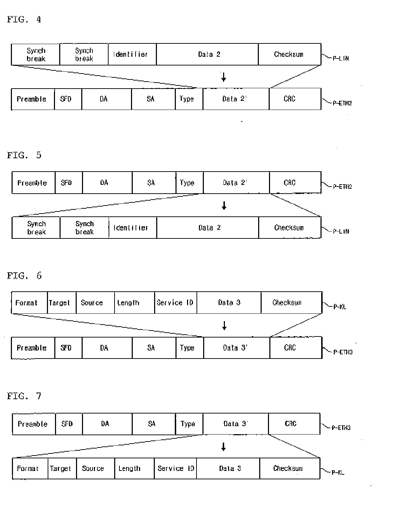

Fig. 4 is a view illustrating a process of packaging a Local Interconnect Network (LIN) packet in an Ethernet packet.

Referring to Fig. 4, the LIN packet (P-LIN) includes a Synchronization break (Synch break), Synchronization bytes (Synch bytes), an Identifier, a data field (Data2), and a Checksum.

The Synchronization break (Synch break) may be used as a start signal of a new packet, and the Synchronization byte may be indicated in a specific bit pattern for synchronization.

The Identifier includes a message ID assigned to each message to be transmitted and received according to a purpose.

The data (Data2) includes data to be transmitted, and the Checksum is used to detect an error of the LIN packet (P-LIN).

The gateways 100, 200 and 300 can individually package the entire packet, i.e. the LIN packet (P-LIN), of the other protocol as well as the Ethernet protocol in the data field (Data2') of the Ethernet packet (P-ETH2). That is, all fields of the packaged LIN packet (P-LIN), i.e. the Synchronization break (Synch break), the Synchronization byte (Synch byte), the Identifier, the data (Data2) and the Checksum, are included in the data field (Data2') of the Ethernet packet (P-ETH2).

According to the embodiment of the present invention, after packaging, the gateways 100, 200 and 300 can individually generate residual fields, i.e. the Preamble, the SFD, the DA, the SA, the Type and the CRC, of the Ethernet packet (P-ETH2), except for the data field (Data2'). According to circumstances, an unnecessary part may be maintained in a default state.

Therefore, the gateways 100, 200 and 300 individually package the LIN packet (P-LIN) in the Ethernet packet (P-ETH2), thereby transmitting the LIN packet (P-LIN) through the Ethernet communication network without a conversion process.

The Ethernet packet (P-ETH2) has a substantially identical configuration to that of the Ethernet packet (P-ETH1) of Fig. 1, except that the LIN packet (P-LIN) is packaged in the data field (Data2').

Fig. 5 is a view illustrating a process of unpackaging the LIN packet packaged in the Ethernet packet.

Referring to Figs. 1, 4 and 5, the gateways 100, 200 and 300 individually unpackage the LIN packet (P-LIN) included in the data field (Data2') of the Ethernet packet (P-ETH2) which is received through the Ethernet communication network, and transmit the unpackaged LIN packet to the electronic control units 110, 210 and 310, respectively.

The unpackaging process of Fig. 5 is achieved through a reverse process of the packaging process shown in Fig. 4.

Fig. 6 is a view illustrating a process of packaging a K-LINE packet in an Ethernet packet.

Referring to Figs. 1 and 6, the K-LINE packet (P-KL) includes a Format, a Target, a Source, a Length, a Service ID, a data field (Data3), and a Checksum.

The Format is a field to define a form of content and a character to be output, and the Target and the Source are selective fields to access multiple nodes. The Length indicates a size of the data (Data3).

The Format, the Target, the Source and the Length belong to a header, and the Service ID and the data (Data3) belong to data bytes. The Checksum is a bit to detect error.

The gateways 100, 200 and 300 can individually package an entire packet, i.e. the K-LINE packet (P-KL), of the other protocol as well as the Ethernet protocol in the data field (Data3') of the Ethernet packet (P-ETH3). That is, all fields of the packaged K-LINE packet (P-KL), i.e. the Format, the Target, the Source, the Length, the Service ID, the data (Data3), and the Checksum, are included in the data field (Data3') of the Ethernet packet (P-ETH3).

According to the embodiment of the present invention, after packaging, the gateways 100, 200 and 300 can individually generate residual fields, i.e. a Preamble, a SFD, a DA, a SA, a Type and a CRC, of the Ethernet packet (P-ETH3) except for the data field (Data3'). According to circumstances, an unnecessary part may be maintained in a default state.

Therefore, the gateways 100, 200 and 300 package the K-LINE packet (P-KL) in the Ethernet packet (P-ETH3), thereby transmitting the packaged K-LINE packet (P-KL) through the Ethernet communication network without a conversion process.

The Ethernet packet (P-ETH3) has a substantially identical configuration to that of the Ethernet packet (P-ETH1) of Fig. 1, except that the K-LINE packet (P-KL) is packaged in the data field (Data3').

Fig. 7 is a view illustrating a process of unpackaging the K-LINE packet packaged in the Ethernet packet.

Referring to Figs. 1, 6 and 7, the gateways 100, 200 and 300 individually unpackage the K-LINE packet (P-KL) included in the data field (Data3') of the Ethernet packet (P-ETH3) which is received through the Ethernet communication network, and transmit the unpackaged K-LINE packet to the electronic control units 110, 210 and 310, respectively.

The unpackaging process of Fig. 7 is achieved through a reverse process of the packaging process shown in Fig. 6.

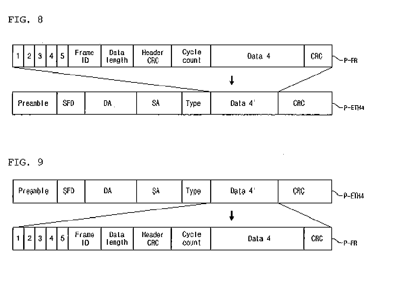

Fig. 8 is a view illustrating a process of packaging a FlexRay packet in an Ethernet packet.

Referring to Figs. 1 and 8, the FlexRay packet (P-FR) includes a reserved bit 1, a data preamble indicator 2, a null frame indicator 3, a sync frame indicator 4, a start frame indicator 5, a Frame ID, a Data length, a Header CRC, a Cycle count, a data field (Data4) and a CRC.

The reserved bit 1 indicates whether to transmit or receive data, and the data preamble indicator 2 indicates a state of a connection with a network. The null frame indicator 3 indicates a validity of the data, and the sync frame indicator 4 indicates whether to store a synchronized FlexRay packet (P-FR) in a node. The start frame indicator 5 indicates whether the FlexRay packet (P-FR) is a start frame.

The Frame ID may be used to identify the FlexRay packet (P-FR) and to determine priority of an event trigger frame.

The Data length indicates a length of data (Data4), and the Header CRC may be used to detect error during a transmission. The Cycle count is a count value that increases whenever a communication period starts.

The reserved bit 1, the data preamble indicator 2, the null frame indicator 3, the sync frame indicator 4, the start frame indicator 5, the Frame ID, the Data length, the Header CRC and the Cycle count are included in a header.

The data field (Data4) includes data to be transmitted. The CRC is used to detect error.

The gateways 100, 200 and 300 can individually package an entire packet, i.e. the FlexRay packet (P-FR), of an other protocol as well as the Ethernet protocol in the data field (Data4') of the Ethernet packet (P-ETH4). That is, all fields of the FlexRay packet (P-FR), i.e. the reserved bit 1, the data preamble indicator 2, the null frame indicator 3, the sync frame indicator 4, the start frame indicator 5, the Frame ID, the Data length, the Header CRC, the Cycle count, the data field (Data4) and the CRC, are included in a data field (Data4') of an Ethernet packet (P-ETH4).

According to the embodiment of the present invention, after packaging, the gateways 100, 200 and 300 can individually generate residual fields, i.e. the Preamble, the SFD, the DA, the SA, the Type and the CRC of the Ethernet packet (P-ETH4), except for the data field (Data4'). According to circumstances, an unnecessary part may be maintained in a default state.

Therefore, the gateways 100, 200 and 300 individually package the FlexRay packet (P-FR) in the Ethernet packet (P-ETH4), thereby transmitting the FlexRay packet (P-FR) through the Ethernet communication network without a conversion process.

The Ethernet packet (P-ETH4) has a substantially identical configuration to that of the Ethernet packet (P-ETH1) of Fig. 1, except that the FlexRay packet (P-FR) is packaged in the data field (Data4').

Fig. 9 is a view illustrating a process of unpackaging the FlexRay packet packaged in the Ethernet packet.

Referring to Figs. 1, 8 and 9, the gateways 100, 200 and 300 individually unpackage the FlexRay packet (P-LIN) included in the data field (Data4') of the Ethernet packet (P-ETH4) which is received through the Ethernet communication network, and transmit the unpackaged FlexRay packet to the electronic control units 110, 210 and 310, respectively.

The unpackaging process of Fig. 9 is achieved through a reverse process of the packaging process shown in Fig. 8.

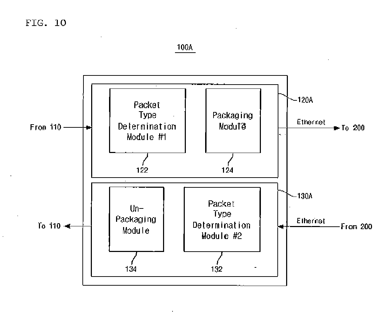

Fig. 10 is a block diagram illustrating an example of the gateway shown in FIG. 1, according to the embodiment of the present invention.

Referring to Figs. 1 and 10, a gateway 100A which is an example of the gateway 100 shown in Fig. 1 includes a receiving circuit 120A and a transmission circuit 130A.

The receiving circuit 120A includes a first packet type determination module 122 and a packaging module 124.

The first packet type determination module 122 can receive packets of various protocols such as a CAN packet, a LIN packet, a K-LINE packet, and a FlexRay packet, transmitted from each of the electronic control units 110, 210 and 310, and determine the types of the received packets of the protocols. The first packet type determination module 122 can transmit data with relation to the determined type of the packet along with the packets of the various protocols which is received from each of the electronic control units, to the packaging module 124.

The packaging module 124 can package the packets of the various protocols, i.e. the CAN packet, the LIN packet, the K-LINE packet, and the FlexRay packet, in the data field of the Ethernet packet, based on data concerning the type of the packet. In this case, the packaging module 124 can adjust space allocated to the data field of the Ethernet packet in order to package the packet according to the type of the packet. According to the embodiment of the present invention, the packaging module 124 may package the data relating to the type of the packet along with the packet in the data field of the Ethernet packet.

The packaging module 124 can transmit the Ethernet packet, in which the packets of various protocols including the CAN packet, the LIN packet, the K-LINE packet and the FlexRay packet are packaged, to another gate 200.

According to the embodiment of the present invention, the receiving circuit 120A may not include the first packet type determination module 122. In this case, the packaging module 124 packages the packets of the various protocols, i.e. the CAN packet, the LIN packet, the K-LINE packet, and the FlexRay packet, in the data field of the Ethernet packet, regardless of the type of the packet.

The transmission circuit 130A includes a second packet type determination module 132 and an unpackaging module 134.

The second packet type determination module 132 determines the type of the packet of the other protocol, i.e. the CAN packet, the LIN packet, the K-LINE packet, and the FlexRay packet, which is packaged in the Ethernet packet transmitted from the gateway 200. The second packet type determination module 132 transmits both the data relating to the determined type of the packet of the other protocol and the packet of the other protocol, i.e. the CAN packet, the LIN packet, the K-LINE packet, and the FlexRay packet, to the unpackaging module 134.

The unpackaging module 134 unpackages the packet of the other protocols, i.e. the CAN packet, the LIN packet, the K-LINE packet, and the FlexRay packet, which is packaged in the Ethernet packet, based on the data concerning the type of the packet of the other protocol. In this case, the unpacking module 134 determines a part of the data filed of the Ethernet packet which has to be unpackaged, according to the type of the packet.

According to the embodiment of the present invention, the transmission circuit 130A may not include the second packet type determination module 132. In this case, the unpackaging module 134 can unpackage the packets of the various protocols, i.e. the CAN packet, the LIN packet, the K-LINE packet, and the FlexRay packet, which are packaged in the data field of the Ethernet packet, regardless of the type of the packet.

The gateways 200 and 300 may individually have the same configuration as that of the gateway 100A.

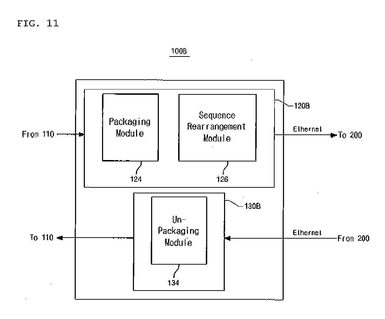

Fig. 11 is a block diagram illustrating another example of a gateway shown in Fig. 1.

Referring to Figs. 1, 10 and 11, a gateway 100B which is another example of the gateway 100 shown in Fig. 1 includes a receiving circuit 120B and a transmission circuit 130B.

The receiving circuit 120B includes a packaging module 124 and an order rearranging module 126. The packaging module 124 shown in Fig. 11 has a substantially identical configuration and function as those of the packaging module 124 shown in Fig. 10.

The order rearranging module 126 can extract data related to transmission priority from a field of the packet of the other protocol, i.e. the Identifier of the CAN packet of Fig. 1, when the packet of the protocols is packaged in the data field of the Ethernet packet by the packaging module 124.

The order rearranging module 126 rearranges the Ethernet packet according to the transmission priority based on the extracted data, when the packet of the other protocol, i.e. the CAN packet, the LIN packet, the K-LINE packet, the FlexRay packet and the MOST packet, is packaged in the data field of the Ethernet packet.

According to the embodiment of the present invention, the order rearranging module 126 may be implemented to include a First-In-First-Out (FIFO) buffer.

Alternatively, the order arranging module 126 may be implemented in an interior of the transmission circuit 130B or outside of the gateway 100B.

The unpackaging module 134 included in the transmission circuit 130B carries out a substantially identical function to that of the unpackaging module 134 of Fig. 10.

The gateways 200 and 300 may individually have the same configuration as that of the gateway 100B.

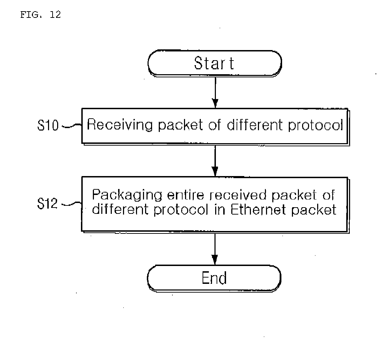

Fig. 12 is a flowchart illustrating a process of packaging a packet of an other protocol in an Ethernet protocol packet according to the embodiment of the present invention.

Referring to Figs. 1 to 12, in step S10, the gateway 100 receives the packet of the other protocol, i.e the CAN packet, the LIN packet, the K-LINE packet, the FlexRay packet, and the MOST packet, from each of the electronic control units 110, 210 and 310.

In step 12, the gateway 100 packages the received entire packet of the other protocol in the data field of the Ethernet packet.

The gateway 100 transmits the Ethernet packet in which the entire packet of the other protocol is packaged, to the gateways 200 and 300.

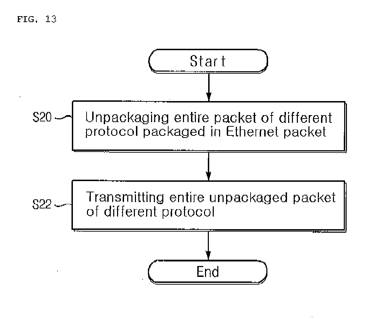

Fig. 13 is a flowchart illustrating a process of unpackaging an Ethernet protocol packet in which a packet of an other protocol is packaged, according to the embodiment of the present invention.

In step S20, the gateway 100 receives the Ethernet packet in which the entire packet of the other protocol is packaged, from another gateway 200, and unpackages the received Ethernet packet so as to obtain the entire packet of the other protocol.

In step S22, the gateway 100 transmits the entire packet of the other protocol obtained through the unpackaging process to the electronic control units 110, 210 and 310.

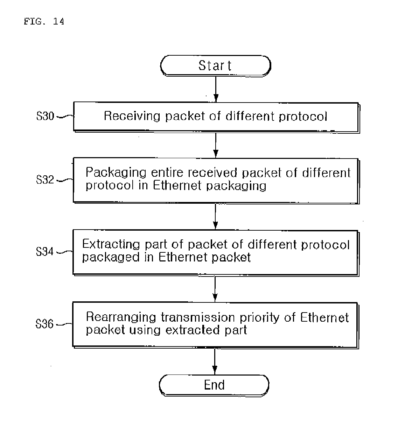

Fig. 14 is a flowchart illustrating a process of rearranging a transmission priority of a packet of an Ethernet protocol in which the packet of the other protocol is packaged according to the embodiment of the present invention.

Referring to Figs. 1 to 12 and 14, in step S30, the gateway 100 receives the packet of the other protocol, i.e the CAN packet, the LIN packet, the K-LINE packet, the FlexRay packet, and the MOST packet, from each of the electronic control devices 110, 210 and 310.

In step 32, the gateway 100 packages the received entire packet of the other protocol in the data field of the Ethernet packet.

In step 34, The gateway 100 extracts data related to the transmission priority from a field of the packet of the other protocol, i.e. the Identifier of the CAN packet of Fig. 1, when the packet of the other protocol, i.e. the CAN packet, the LIN packet, the K-LINE packet, and the FlexRay packet, is packaged in the data field of the Ethernet packet.

In step S36, the gateway 100 rearranges the transmission priority of the Ethernet packet based on the extracted data.

Although the present invention has been described with reference to an embodiment shown in the drawings, it should be understood by those skilled in the art that the present invention may be changed and modified in various forms and include the equivalents thereof. Therefore, the technical scope of the present invention should be defined by the technical spirit of the attached claims.

## Claims

1. A method of packaging a packet, the method comprising:
receiving by a gateway a packet of an other protocol transmitted from an electronic control unit; and
packaging by the gateway the entire received packet of the other protocol in a data field of an Ethernet packet.

2. The method as claimed in claim 1, further comprising generating by the gateway residual fields of the Ethernet packet except for the data field after packaging the received packet by means of the gateway.

3. The method as claimed in claim 2, wherein the packet of the other protocol is a Control Area Network (CAN) packet, a Local Interconnect Network (LIN) packet, a K-LINE packet, a FlexRay packet or Media Oriented Systems Transport(MOST) packet.

4. A method of unpackaging a packet, the method comprising:
receiving by a first gateway an Ethernet packet transmitted from a second gateway; and
unpackaging by the first gateway an entire packet of an other protocol which is packaged in a data field of the received Ethernet packet.

5. The method as claimed in claim 4, further comprising transmitting the unpackaged packet of the other protocol to an electronic control unit by means of the gateway after unpackaging the packet by the gateway.

6. The method as claimed in claim 5, wherein the packet of the other protocol is a Control Area Network (CAN) packet, a Local Interconnect Network (LIN) packet, a K-LINE packet, a FlexRay packet or Media Oriented Systems Transport(MOST) packet.

7. A communication system in a vehicle, comprising:
a first gateway for receiving a packet of an other protocol transmitted from an electronic control unit, and packaging the received entire packet of the other protocol in a data field of an Ethernet packet; and
a second gateway for receiving the Ethernet packet transmitted through an Ethernet communication network from the first gateway, and unpackaging the entire packet of the other protocol which is packaged in the data field of the received Ethernet packet.

8. A communication system in a vehicle as claimed in claim 7, wherein the first gateway and the second gateway form a bus structure.

9. A communication system in a vehicle as claimed in claim 8, wherein the first gateway extracts a part of the packet of the other protocol when the entire packet of the other protocol is packaged in the data field of the Ethernet packet, and rearranges transmission priority of the Ethernet packet based on the part of the packet of the other protocol.

10. A communication system in a vehicle as claimed in claim 9, wherein the packet of the other protocol is a Control Area Network (CAN) packet, a Local Interconnect Network (LIN) packet, a K-LINE packet, a FlexRay packet or Media Oriented Systems Transport(MOST) packet.
